# EUROPÄISCHE PATENTSCHRIFT

(11) **EP 3 017 675 B1**
(45) Veröffentlichungstag und Bekanntmachung des Hinweises auf die Patenterteilung: **22.08.2018**
(21) Anmeldenummer: 15401110.0
(22) Anmeldetag: 30.10.2015
(51) Int. Cl.: A01C 17/00, A01C 21/00

(54) **VERFAHREN ZUR BESTIMMUNG DER KORNGRÖSSE**
METHOD FOR DETERMINING GRAIN SIZE
PROCÉDÉ DE DÉTERMINATION DE GROSSEUR DE GRAIN

(30) Priorität: 04.11.2014 DE 102014116022
(43) Veröffentlichungstag der Anmeldung: 11.05.2016
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Ströbel-Fröschle, Markus, 49124 Georgsmarienhütte (DE)

(56) Entgegenhaltungen:
- EP-A1- 0 682 857
- EP-A1- 2 756 745
- EP-A2- 0 303 325
- EP-A2- 2 777 376

## Beschreibung

Die Erfindung betrifft eine Verfahren zur Bestimmung der Korngröße von Streugut während der Verteilung gemäß des Oberbegriffes des Patentanspruches 1.

Schleuderstreuer, im Allgemeinen ausgebildet als Zentrifugalstreuer, welche typischerweise landwirtschaftliches Gut von zumindest einer, vorzugsweise zwei, Schleuderscheiben mittels auf den Schleuderscheiben angeordneten, typischerweise jeweils zwei, Wurfschaufeln verteilen sind seit geraumer Zeit Stand der Technik. Das Streugut wird mittels der auf der rotierenden Schleuderscheibe angeordneten Wurfschaufeln durch die auftretenden Zentrifugalkräfte in radialer Richtung beschleunigt und auf diese Weise verteilt.

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar sind. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.

Die EP 0 682 857 A1 offenbart ein Verfahren um die Streubreite bei einem Düngerstreuer zu regeln, wobei mittels akustischer Sensoren der Abwurfwinkel ermittel- und justierbar ist, so dass die gewünschte Arbeitsbreite eingestellt werden kann.

Verfahren zur Bestimmung der Flugweite von Streugut sind offenbart in EP 2 777 376 A2 und EP 2 756 745 A1. Ebenso ist es Stand der Technik den Abwurfwinkel mittels Sensoren zu bestimmen und entsprechend bekannter Tabellen, Formeln und/oder Graphen bei Abweichung zu einem vorgegebenen Sollwert Anpassungen an den genannten Parametern vorzunehmen (DE 38 87 218T2, DE 197 23 359 A1).

Besagte zunehmende Präzisierung erfordert jedoch eine immer detailliertere Analyse von Streuverhalten, Umgebungsbedingungen und Streuguteigenschaften um die Einstellmöglichkeiten des Schleuderstreuers in vorteilhafter Weise auf die jeweiligen Anforderungen, wie Wettereinflüsse, Geländeneigung, Randbereiche der landwirtschaftlichen Fläche und Streugutbeschaffenheit, anpassen zu können. Neben der Arbeitsbreite hat die Wurfweite entscheidenden Einfluss auf die Geometrie des Streufächers. Die Wurfweite kann zum einen mittels Sensorelementen, wie Radarsensoren, direkt aus dem Auftreffpunkt des Streugutes auf die landwirtschaftliche Fläche bestimmt werden. Problematisch an diesem Ansatz ist, dass der Auftreffpunkt in großer Entfernung, typischerweise ungefähr 20 m, bestimmt und das auftreffende Streugut von dem wegfliegenden, gerade abgeworfenen Streugut unterschieden werden muss. Zusätzlich ist gerade beim Streuen auf bewachsenen Flächen das Erkennen des Streugutes kurz vor dem Eintauchen in den Bestand auf Grund der normalerweise inhomogenen Wuchshöhe problematisch.

Es sind aber auch indirekte Methoden denkbar, beispielsweise mittels Bestimmung der Geschwindigkeit des Streugutes, beispielsweise mit Hilfe von Radarsensoren, an verschiedenen Orten und entsprechender Bestimmung des Geschwindigkeitsverlaufes, um eine Vorhersage der Flugbahn des Streugutes treffen zu können. Hierfür sind jedoch Messungen an mindestens zwei verschiedenen Positionen notwendig, was den Einsatz von zumindest zwei Sensoren erfordert.

Aufgabe der vorliegenden Erfindung ist es in möglichst einfacher und für äußere Einflüsse unempfindlicher Weise die Flugweite und/oder die Korngröße von landwirtschaftlichem Streugut zu ermitteln.

Dies wird durch ein Verfahren zur Bestimmung der Korngröße gemäß dem Oberbegriff des Anspruchs 1 erreicht, indem die mittlere Partikelgröße des Streugutes aus der Amplitude des empfangenen Signals zumindest einer Sensoreinheit bestimmt wird, wobei für deren Bestimmung zusätzlich die Stellung des Dosierorgans und damit der Partikelfluss berücksichtigt wird,
und wobei die chemische Zusammensetzung des Streugutes sowie die Größe der Zuführöffnung bekannt ist oder bestimmt werden kann. Durch dieses Verfahren können das Flugverhalten und damit die Wurfweite aus der Korngröße des Streugutes unter Einbeziehung weiterer Kenngrößen in vorteilhafter Weise aus einem einzigen Signal, nämlich dem Amplitudensignal des betreffenden Sensors bestimmt werden. Die zusätzlich benötigten Kenngrößen sind die Abwurfgeschwindigkeit von der Schleuderscheibe sowie der vertikale Abwurfwinkel und die Oberflächenbeschaffenheit des Streugutes. Die bekannte Zusammensetzung des Streugutes bestimmt hierbei die Oberflächenbeschaffenheit und damit zusammen mit der Korngröße die Flugeigenschaften. Zusätzlich beeinflusst diese die Rutscheigenschaften auf der Schleuderscheibe/Wurfschaufel, sodass in Kombination mit der Schleuderscheibendrehzahl sowie der Geometrie von Wurfschaufel und Schleuderscheibe auf die Abwurfgeschwindigkeit geschlossen werden kann.

Alternativ kann mittels des Dopplersignals des Sensors, welcher zur Korngrößenbestimmung verwendet wird, die Fluggeschwindigkeit kurz nach dem Verlassen der Wurfschaufel bestimmt werden. Auch der vertikale Abwurfwinkel lässt sich aus der Geometrie von Wurfschaufel und Schleuderscheibe ermitteln. Somit ist die Korngröße, und je nach Art der Bestimmung die Geschwindigkeit, die einzige Information, welche Variabel ist und sich nicht aus Einstellparametern des Schleuderstreuers ergibt und somit aus dem Amplitudensignal des Sensors, in Kombination mit dem Streugutfluss, welcher sich aus der Größe der Auslassöffnung des Streugutes auf die Schleuderscheibe ergibt, bestimmt werden muss. Zusätzlich gibt diese Information Auskunft über Qualität und Homogenität des Streugutes, da große Körner generell bessere Flugeigenschaften aufweisen und damit zu bevorzugen sind und bei sich stark ändernder Korngröße während des Streuprozesses auf eine minderwertige Streugutcharge geschlossen werden kann.

In einer möglichen Ausgestaltung der Erfindung ist der Sensor derart ausgebildet, dass er elektromagnetische Wellen aussendet und empfängt.

In einer vorteilhafter Weiterbildung ist der Sensor als Radarsensor ausgestaltet, so dass sich das Korngrößenspektrum in einfacherweise berührungslos und schmutzunempfindlich bestimmen lässt.

In einer alternativen Ausgestaltung ist der Sensor als zumindest ein Ultraschallsensor ausgebildet.

In einer vorteilhaften Weiterbildung wird der zeitliche Verlauf des mittleren horizontalen Flugwinkels/Abwurfwinkels des Streugutes relativ zur Fahrtrichtung und/oder der Korngröße und/oder der Wurfweite während des Verteilens des Streugutes unter Berücksichtigung von Veränderungen der Einstellungen der Verteilmaschine, wie vorzugsweise Streutellerdrehzahl und/oder Aufgabeort des Streugutes auf den Streuteller, erfasst und eine Bewertung der Qualität des Streugutes und/oder der Streugutverteilung aus der Variation des mittleren horizontalen Flugwinkels/Abwurfwinkels des Streugutes relativ zur Fahrtrichtung und/oder der Korngröße und/oder der Wurfweite während des Streuvorganges vorgenommen. Somit kann in vorteilhafter Weise eine Bewertung der Streugutqualität aus einer Messung der Korngröße erfolgen.

In einer vorteilhaften Weiterbildung wird die Bewertung und/oder Abschätzung der Streugutqualität dem Landwirt auf einer geeigneten Anzeigevorrichtung angezeigt, wobei die Qualität des Streugutes und/oder die Qualität der Querverteilung des Streugutes mit abnehmender Variation von Korngröße und/oder Abwurfwinkel und/oder Wurfweite zunimmt.

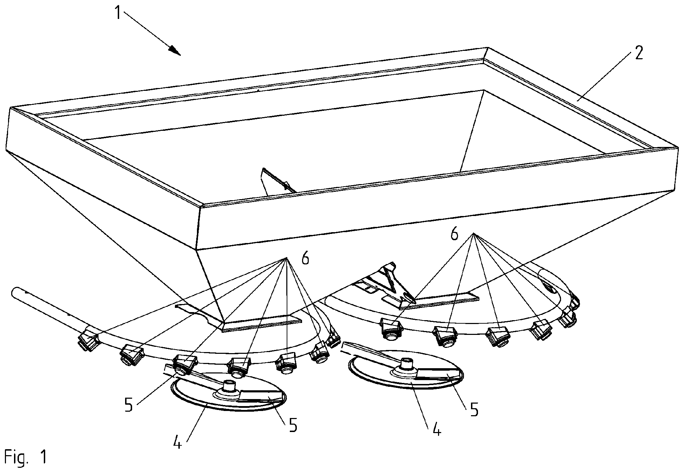

Weitere Einzelheiten der Erfindung sind der Beispielsbeschreibung zu entnehmen. Die Zeichnungen zeigen
- Fig.1: Schleuderstreuer mit Radarsensoreinheit zur Bestimmung der Korngröße und
- Fig.2: Signaländerung während des Streuprozesses hervorgerufen durch Korngrößenvariation.

Das mittels einer Verteilmaschine 1 auszubringende Streugut wird in einem Behälter 2 vorgehalten und über Auslauftrichter den Schleuderscheiben 4 zugeführt. Das Streugut passiert hier bei eine Auslauföffnung, welche mittels eines Dosierorganes und einem ihm zugeordneten Einstellmittel in seiner Größe reguliert werden kann. Das von den rotierenden Schleuderscheiben 4 mittels der Wurfschaufeln 5 abgeworfene Streugut wird mittels Sensoren, vorzugsweise Radarsensoren 6 mit elektromagnetischen Wellen im Detektionsbereich in der Weise beaufschlagt beaufschlagt, dass das sich von der Schleuderscheibe wegbewegende Streugut einen Teil der elektromagnetischen Wellen zum Sensor zurückreflektiert.

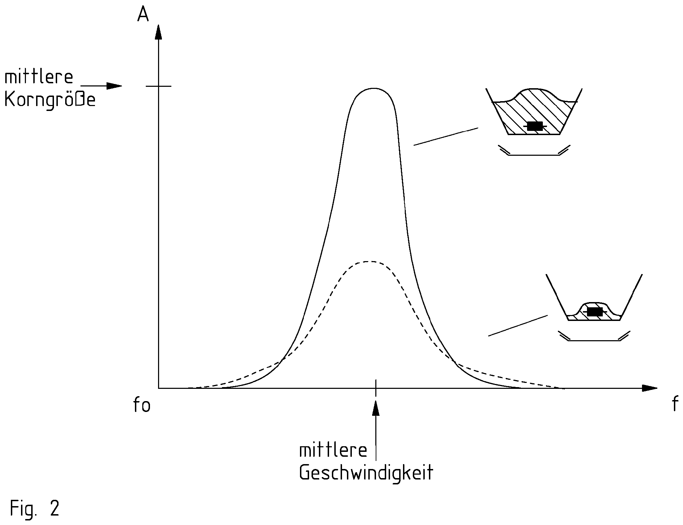

Dieses Signal ist in Frequenz und Amplitude, wie in Fig. 2 dargestellt, analysierbar. Hierbei gibt die Frequenz basierend auf dem Prinzip des Dopplereffektes Auskunft über die momentane Geschwindigkeit des Streugutes. Dabei wird die Frequenzverschiebung zur ungestörten, Frequenz der ausgesendeten Wellen betrachtet. Eine große Abweichung der Frequenz des zurückreflektierten Signals im Vergleich zur Frequenz der ausgesendeten Wellen f₀ lässt auf eine große Geschwindigkeitsvariation schließen, was auf eine große Variation um die mittlere Geschwindigkeit und damit potentiell die mittlere Korngröße hinweist. Die Amplitude der gemessenen Verteilung ist ein Maß für die mittlere Korngröße, wobei für deren Bestimmung zusätzlich die Stellung des Dosierorganes und damit der Partikelfluss berücksichtigt wird. Je höher der Peak der gemessenen Kurve, desto größer sind im Mittel die Partikel des ausgebrachten Streugutes. Der Grund hierfür ist, dass bei gleicher Materialdichte der betrachteten Fläche der Anteil der reflektierten Wellen bei großen Partikeln im Durchschnitt größer ist als bei kleinen Partikeln Bei einer alternativen Art der Auswertung kann auch nur die Fläche unter der Kurve verwendet werden. Diese Berechnung lässt sich auch durch Analoge Elektronik mit entsprechend dimensionierten Filtern berechnen.

Die mittlere Wurfweite des Streugutes lässt sich nun vorteilhaft aus der momentanen mittleren Geschwindigkeit sowie der Korngröße berechnen, wobei zusätzlich die bekannten Größen vertikaler Abwurfwinkel und Material des Streugutes berücksichtigt werden müssen. Alternativ kann wie bereits beschrieben lediglich die mittlere Korngröße bestimmt und die mittlere Abwurfgeschwindigkeit mittels des Materials und der Scheibendrehzahl berechnet werden.

Für eine Charakterisierung des Streugutes hinsichtlich der Qualität ist nun beispielsweise ein Vergleich der Spektren des Streugutes zu verschiedenen Zeiten des Streuvorganges nötig. Dabei kann es bei inhomogener Zusammensetzung der Streugutcharge zu Veränderungen insbesondere in der Amplitude des detektierten Signals kommen, wie in Fig. 2 anhand der gestrichelten Kurve gezeigt. In diesem Beispiel ist die Signalhöhe bei vollem Behälter sehr viel größer als bei leerem Behälter, was auf eine stark abnehmende Korngröße des sich im unteren Bereich des Behälters befindlichen Streugutes hindeutet. Auf diese Weise kann eine Aussage über die Homogenität des verwendeten Streugutes getroffen werden. Alternativ oder zusätzlich können die Wurfweite und/oder der mittlere horizontale Abwurfwinkel oder andere Verteilparameter in die Bewertung der Streugutqualität einbezogen werden.

## Patentansprüche

1. Verfahren zur Bestimmung der Korngröße des Streugutes einer landwirtschaftlichen Verteilmaschine (1), welche über zumindest einen mit zumindest einer Wurfschaufel (5) versehenen Streuteller (4) zur Verteilung des Streugutes, zumindest eine Vorrichtung zur Positionierung des Aufgabeortes des Streugutes auf den Streuteller und zumindest eine Sensoreinheit (6) zur Detektion des Flugverhaltens des Streugutes verfügt, wobei das Streugut zumindest eine Auslauföffnung passiert, welche mittels eines Dosierorgans und einem ihm zugeordneten Einstellmittel in ihrer Größe reguliert wird, wobei die mittlere Korngröße des Streugutes aus der Amplitude des empfangenen Signals zumindest einer Sensoreinheit bestimmt wird, **dadurch gekennzeichnet, dass** für die Bestimmung der mittleren Korngröße zusätzlich die Stellung des Dosierorgans und damit der Partikelfluss berücksichtigt wird, und wobei die chemische Zusammensetzung des Streuguts sowie die Größe der Zuführöffnung bekannt ist oder bestimmt werden kann.

2. Verfahren nach Anspruch 1, **dadurch gekennzeichnet, dass** der zumindest eine Sensor (6) elektromagnetische Wellen, insbesondere im sichtbaren Bereich, aussendet und empfängt.

3. Verfahren nach Anspruch 1 oder 2 **dadurch gekennzeichnet, dass** der Sensor (6) zumindest ein Radarsensor ist.

4. Verfahren nach Anspruch 1, **dadurch gekennzeichnet, dass** der Sensor (6) zumindest ein Ultraschallsensor ist.

5. Verfahren nach zumindest einem der Ansprüche 1 bis 4, **dadurch gekennzeichnet, dass** der zeitliche Verlauf eines mittleren horizontalen Flugwinkels/Abwurfwinkels des Streugutes relativ zur Fahrtrichtung und/oder der Korngröße und/oder einer Wurfweite während des Verteilens des Streugutes unter Berücksichtigung von Veränderungen der Einstellungen der Verteilmaschine (1), wie vorzugsweise Streutellerdrehzahl und/oder Aufgabeort des Streugutes auf den Streuteller (4), erfasst wird und eine Bewertung der Qualität des Streugutes und/oder der Streugutverteilung aus der Variation des mittleren horizontalen Flugwinkels/Abwurfwinkels des Streugutes relativ zur Fahrtrichtung und/oder der Korngröße und/oder der Wurfweite während des Streuvorganges vorgenommen.

6. Verfahren nach zumindest einem der Ansprüche 5, **dadurch gekennzeichnet, dass** die Bewertung und/oder Abschätzung dem Landwirt auf einer geeigneten Anzeigevorrichtung angezeigt wird, wobei die Qualität des Streugutes und/oder die Qualität der Querverteilung des Streugutes mit abnehmender Variation zunehmen.

## Claims

1. Method for determining the grain size of the spreading material of an agricultural distribution machine (1), which has at least one spreading disc (4) provided with at least one thrower blade (5) for distributing the spreading material, at least one device for positioning the drop point of the spreading material on the spreading disc, and at least one sensor unit (6) for detecting the flight behaviour of the spreading material, the spreading material passing at least one outlet opening, the size of which is regulated by means of a metering element and an adjusting means assigned thereto, the average grain size of the spreading material being determined from the amplitude of the received signal from at least one sensor unit, **characterized in that** for the determination of the average grain size, the position of the metering element and therefore the particle flow is additionally taken into account, and wherein the chemical composition of the spreading material and the size of the feed opening are known or can be determined.

2. Method according to Claim 1, **characterized in that** the at least one sensor (6) transmits and receives electromagnetic waves, in particular in the visible range.

3. Method according to Claim 1 or 2, **characterized in that** the sensor (6) is at least one radar sensor.

4. Method according to Claim 1, **characterized in that** the sensor (6) is at least one ultrasonic sensor.

5. Method according to at least one of Claims 1 to 4, **characterized in that** the time profile of an average horizontal flight angle/throwing angle of the spreading material relative to the direction of travel and/or the grain size and/or a throwing width is detected during the distribution of the spreading material, taking into account changes in the adjustments of the distribution machine (1), such as preferably spreading disc rotational speed and/or drop point of the spreading material on the spreading disc (4), and an assessment of the quality of the spreading material and/or the spreading material distribution is performed from the variation of the average horizontal flight angle/throwing angle of the spreading material relative to the direction of travel and/or the grain size and/or the throwing width during the spreading operation.

6. Method according to at least one of Claims 5, **characterized in that** the assessment and/or estimate is displayed to the farmer on a suitable display device, wherein the quality of the spreading material and/or the quality of the transverse distribution of the spreading material increase/s with decreasing variation.

## Revendications

1. Procédé de détermination de la portée de projection et/ou de la grosseur de grain du produit dispersible d'une machine d'épandage agricole (1), disposant d'au moins un disque d'épandage (4) avec au moins une pale de projection (5) prévue pour l'épandage du produit dispersible, avec au moins un dispositif de positionnement du lieu d'arrivée du produit dispersible sur le disque d'épandage et avec au moins une unité de capteurs (6) pour la détection du comportement de vol du produit dispersible, le produit dispersible passant au moins par une ouverture de sortie dont la taille est réglée à l'aide d'un organe de dosage et d'un moyen de réglage lui étant associé, la grosseur de grain moyenne du produit dispersible étant déterminée par l'amplitude du signal reçu d'au moins une unité de capteurs, **caractérisé en ce que** pour la détermination de la grosseur de grain moyenne, on prend en outre en compte la position de l'organe de dosage et ainsi le débit particulaire et la composition chimique du produit dispersible ainsi que la taille de l'ouverture d'alimentation étant connues ou pouvant être déterminées.

2. Procédé selon la revendication 1, **caractérisé en ce que** l'au moins un capteur (6) émet et reçoit des ondes électromagnétiques, notamment dans la zone visible.

3. Procédé selon la revendication 1 ou 2, **caractérisé en ce que** le capteur (6) est au moins un capteur radar.

4. Procédé selon la revendication 1, **caractérisé en ce que** le capteur (6) est au moins un capteur à ultrasons.

5. Procédé selon au moins l'une quelconque des revendications 1 à 4, **caractérisé en ce que** la courbe dans le temps d'un angle de vol/éjection horizontal du produit dispersible par rapport à la direction de conduite et/ou à la grosseur de grain et/ou à une portée de projection est déterminée pendant l'épandage du produit dispersible en prenant en compte le changement dans les réglages de la machine d'épandage (1), comme de préférence de la vitesse de rotation du disque d'épandage et/ou du lieu cible du produit dispersible sur le disque d'épandage (4), et une estimation de la qualité du produit dispersible et/ou de l'épandage du produit dispersible est effectuée pendant l'opération d'épandage à partir de la variation de l'angle de vol/éjection horizontal moyen du produit dispersible par rapport à la direction de conduite et/ou à la grosseur de grain et/ou à la portée de projection.

6. Procédé selon au moins l'une quelconque des revendications 5, **caractérisé en ce que** l'estimation et/ou l'évaluation est indiquée à l'agriculteur sur un dispositif d'affichage adapté, la qualité du produit dispersible et/ou la qualité de l'épandage transversal du produit dispersible augmentant à mesure que la variation diminue.
